# EUROPÄISCHE PATENTSCHRIFT

(11) **EP 2 789 716 B1**
(45) Veröffentlichungstag und Bekanntmachung des Hinweises auf die Patenterteilung: **16.09.2015**
(21) Anmeldenummer: 14000962.2
(22) Anmeldetag: 14.03.2014
(51) Int. Cl.: D01G 19/10

(54) **Rundkamm einer Kämmmaschine**
Round comb of a combing machine
Peigne rond d'une peigneuse

(30) Priorität: 12.04.2013 CH 7632013
(43) Veröffentlichungstag der Anmeldung: 15.10.2014
(73) Patentinhaber: MASCHINENFABRIK RIETER AG, 8406 Winterthur (CH)
(72) Erfinder: Peulen, Jacques, CH-8630 Rüti (CH); Steibli, Sadiah Hanna, CH-8406 Winterthur (CH); Tscherfinger, Hans, CH-8406 Winterthur (CH)

(56) Entgegenhaltungen:
- EP-A1- 2 426 239

## Beschreibung

Die Erfindung bezieht sich auf einen Rundkamm für eine Kämmmaschine mit einem, aus einem Hohlprofil gebildeten Grundkörper, welcher auf einem äusseren, Kreisbogenförmigen Abschnitt eine Kämmgarnitur trägt und drehfest auf einer Welle befestigt ist, wobei - in radialer Richtung der Welle gesehen - auf der, der Kämmgarnitur gegenüberliegenden Seite der Welle ein Massenausgleichselement befestigt ist

Derartige Rundkämme werden für Kämmmaschinen zum Auskämmen einer vorgelegten Fasermasse (Baumwolle, Wolle usw.) verwendet, wobei die Vorlage der Fasermasse in Form von auf Hülsen aufgewickelten Wattebahnen (kurz: Wickel) oder in Form von einzelnen Faserbändern erfolgen kann.

Die Kammspielzahlen (Kammspiel/Minute) haben sich in den letzten Jahren wesentlich erhöht, was auch eine Erhöhung der Produktivität mit sich bringt.

Auch sind die Anforderungen an einen solchen Rundkamm erhöht worden, z. B. wenn der Rundkamm nicht mehr eine kontinuierliche Drehzahl aufweist, sondern mit einer diskontinuierlichen Drehbewegung angetrieben wird, um das System besser auf den Kämmprozess abzustimmen. Eine derartige Ausführung ist z. B. in der JP-PS 58-57529 gezeigt und beschrieben worden.

Durch diese diskontinuierliche Bewegung werden hohe Anforderungen an den Antrieb des Rundkammes gestellt, insbesondere, wenn die relativ grosse Masse des Rundkammes beschleunigt, bzw. verzögert werden muss.

Die für die Kämmmaschine in der Praxis verwendeten Rundkämme bestehen aus einem Rundkammträger, der mit einer Klemmnabe versehen ist, mit welcher er drehfest auf einer angetriebenen Rundkammwelle befestigt ist. Auf einem Teilumfang des Rundkammträgers ist ein Kämmsegment befestigt, mit welchem das von einem Zangenaggregat vorgelegte Ende der Fasermasse (auch Faserbart genannt) ausgekämmt wird. Eine derartige Vorrichtung ist z. B. aus den veröffentlichten DE 101 63 663 A1 und DE 25 03 976 B2 zu entnehmen.

Das Kämmsegment kann sich aus mehreren Teilen zusammensetzten, wobei z. B. ein Grundkörper vorgesehen sein kann, auf welchem eine Kammgarnitur befestigt ist. In diesem Fall ist der Grundkörper mit dem Rundkammträger lösbar verbunden. Es können auch mehrere Kämmsegmente vorhanden sein.

Da das Kämmsegment einseitig am Rundkammträger angebracht ist, benötigt man zum Ausgleich auf der gegenüberliegenden Seite des Kämmsegmentes einen Massenausgleich, damit keine Unwucht entsteht, bzw. Massenschwingungen vermieden werden. Bei den bisher verwendeten Lösungen wurde der Rundkammträger als Gussteil gefertigt, wobei das Gussteil mit einer Zusatzmasse auf der gegenüberliegenden Seite der Befestigungsstelle des Kämmsegmentes versehen ist.

Durch diese Ausführung wird zwar die Masse des Kämmsegmentes ausgeglichen, jedoch weist der so ausgebildete Rundkammträger selbst eine grosse und schwere Masse auf, die bei diskontinuierlicher Rundkammbewegung permanent beschleunigt und verzögert werden muss. Durch den Einsatz einer diskontinuierlichen Drehzahl des Rundkammes ist es möglich mit höheren Kammspielzahlen zu arbeiten. Bei den dabei erzeugten Beschleunigungen und Verzögerungen kommen zusätzliche Beanspruchungen auf die Antriebseinheit zu. Ausserdem kann es dabei in ungünstigen Fällen zu unerwünschten Schwingungen der Vorrichtung führen, was wiederum die Standzeit herabsetzen kann.

Um die Auskämmwirkung zu erhöhen wurden Kämmsegmente vorgeschlagen, welche sich über einen Umfangswinkel von 130 ° und mehr erstrecken, wie z. B. aus der veröffentlichten EP 1 383 948 B1 zu entnehmen ist. Durch diese Erhöhung vergrössert sich auch die Masse des Grundkörpers auf welchem die Kämmgarnituren befestigt sind. Aus der GB 205,128 ist eine Ausführung eines Rundkammes bekannt, wobei der Grundkörper, der die Kämmgarnitur trägt, einstückig ausgebildet ist und an seinen beiden Enden sich direkt auf der Rundkammwelle abstützt. Mittels Schrauben, die durch einen Flansch eines Gegengewichtes ragen, wird der Grundkörper auf der Rundkammwelle festgeklemmt.

Das Gegengewicht ist hierbei mit einem sattelförmigen Ansatz versehen, über welches es auf eine Rundkammwelle aufgeschoben und über Schrauben mit der Rundkammwelle verklemmt wird. Der sattelförmige Ansatz befindet zwischen den beiden Abstützenden des Grundkörpers, womit der Mittenbereich des Grundkörpers ohne Abstützung ist. Der Abstand zwischen den Spitzen der Kämmgarnitur und der unteren Zangenplatte ist in der Kämmposition sehr klein zu halten, um den auszukämmenden, aus der geschlossenen Zange herausragenden Faserbart fast vollständig zu erfassen. Das heisst, um die Masshaltigkeit des Grundkörpers auch in diesem Mittenbereich zu gewährleisten und damit die Kämmverhältnisse über die gesamte Breite der Kämmgarnitur konstant zu halten, ist der Grundkörper bei der Ausführung nach der GB 205,128 relativ massiv auszubilden. Dies wiederum hat zur Folge, dass das Massenträgheitsmoment sehr gross wird, was sich negativ auf die aufzubringende Energie und die Lagerstellen auswirkt, insbesondere, wenn mit hohen Kammspielzahlen und diskontinuierlichen Drehzahlen gearbeitet wird, wie dies heute der Fall ist. Zum Zeitpunkt der Veröffentlichung (1923) der GB 205,128 waren die gefahrenen Kammspielzahlen noch um ein Vielfaches kleiner, womit das Massenträgheitsmoment in diesem Bereich noch keine so grosse Rolle spielte.

Deshalb wurde in der EP-2 426 239 A1 eine Ausführung eines Rundkammes vorgeschlagen, welche bekannte Lösungen verbessert und der Rundkamm ein geringes Massenträgheitsmoment als bekannte Lösungen aufweist. Dabei wird vorgeschlagen, dass der Grundkörper aus einem Hohlprofil besteht, welches einen äusseren Kreisbogenförmigen Abschnitt für die Aufnahme der Kämmgarnitur aufweist und mit einem diesem gegenüberliegenden inneren Abschnitt, mit einer in Richtung der Welle offenen, halbkreisförmigen Mulde, welche sich in Längsrichtung des Hohlprofils erstreckt und über welche sich der Grundkörper auf der Welle abstützt und Befestigungsmittel vorgesehen sind, mit welchen der Grundkörper und das Massenausgleichselement gegeneinander quer zur Längsrichtung der Welle verspannt werden.

Mit dieser Bauweise des Grundkörpers wurde ermöglicht, dass die Dicke des Profils, insbesondere - in Bezug auf die Drehachse der Rundkammwelle - im aussen liegenden Bereich, welcher die Kämmgarnitur trägt, klein gehalten wurde, zumal sich das Profil auf seiner gesamten Länge auf der Rundkammwelle abstützt. Damit kann auch die Masse und somit das Massenträgheitsmoment in diesem Bereich niedrig gehalten werden.

Es hat sich jedoch gezeigt, dass mit der in der EP-2 426 239 A1 gezeigten Lösung die kreisbogenförmige Mulde, mit welcher das Hohlprofil sich auf der Rundkammwelle abstützt aufwändig zu bearbeiten ist, damit eine einwandfreie Auflage des Hohlprofils auf der Rundkammwelle gewährleistet wird und es nicht zu Verspannungen führt. Ausserdem ist es bei dieser Ausführung schwierig, den Abstand zwischen dem Hüllkreis der Kämmgarnitur und der Rundkammachse zu variieren, bzw. einzustellen. Mit einer derartigen Verstellung kann der Abstand zwischen der unteren Zangenplatte der Zange und dem Hüllkreis der Garnitur des Rundkammes eingestellt werden, um eine optimale Auskämmung zu gewährleisten. Eine solche Einstellbarkeit durch den Einsatz eines bogenförmigen Distanzelementes wird z. B. in der DE 297 20 656 U1 gezeigt und beschrieben. Eine exakte Einstellmöglichkeit bis zu kleinsten Schrittgrössen ist jedoch mit einem solchen bogenförmigen Element nicht möglich. Wird z.B. zur Veränderung des Hüllkreisradius der Kämmgarnitur des Rundkammes das, in der DE'656 gezeigte bogenförmige Distanzelement gegen ein anderes, bogenförmiges Distanzelement mit einer anderen Dicke ausgetauscht, so ändert sich der in Richtung des Grundkörpers ragende Aussenradius des Distanzelementes, während der Innenradius des Grundkörpers, mit welchem er auf dem Distanzelement aufliegt konstant bleibt. Dadurch können Verspannungen zwischen dem Grundkörper und dem Distanzelement entstehen.

Der Erfindung liegt daher die Aufgabe zugrunde, Die Nachteile bekannter Ausführungen zu beseitigen. Ausserdem soll eine einfache und präzise Einstellmöglichkeit des Radius des Hüllkreises der Kämmgarnitur des Rundkammes ermöglicht werden.

Diese Aufgabe wird dadurch gelöst, indem vorgeschlagen wird, dass der Grundkörper mit einem, zur Welle hin ragenden inneren Abschnitt versehen ist, welcher eine, in Richtung zur Welle hin offene, in Längsrichtung des Hohlprofils erstreckende Vertiefung aufweist, in welcher ein Stützelement aufgenommen ist, das sich einerseits über eine erste Stützfläche auf einer Grundfläche der Vertiefung und andererseits über eine zweite Stützfläche auf dem Aussenumfang der Welle abstützt und Befestigungsmittel vorgesehen sind, mit welchen der Grundkörper über das Stützelement und das Massenausgleichselement gegeneinander quer zur Längsrichtung der Welle verspannt werden.

Mit der vorgeschlagenen Ausführung ist es möglich, ein Stützelement zur Abstützung des Grundkörpers auf der Rundkammwelle vorzusehen, das im Bereich der Abstützfläche einfach und präzise zu bearbeiten ist. Es ist auch möglich das gleiche Stützelement für den Einsatz unterschiedlicher Module von Kämmgarnituren auf Grundkörpern aus Hohlprofilen einzusetzen. D.h., je nach Einsatzzweck wird nur der Grundköper mit der darauf befindlichen Kämmgarnitur gewechselt, während das Stützelement dasselbe bleibt.

Das Stützelement kann z.B. aus Stahl hergestellt sein. Damit kann die Steifigkeit des, aus einem Hohlprofil bestehenden Grundkörpers noch erhöht werden, welcher aus einem Material mit einem niedrigeren spezifischen Gewicht (z.B. als Aluminium-Strangpressprofil) hergestellt und mit dem Stützelement über Befestigungsmittel verbunden ist. Da sich das Stützelement direkt auf der Rundkammwelle abstützt, kann sein höheres Massenträgheitsmoment durch sein höheres spezifisches Gewicht vernachlässigt werden.

Des Weiteren wird vorgeschlagen, dass die Vertiefung und das Stützelement miteinander einen Formschluss bilden, wobei das Stützelement zumindest teilweise aus der Vertiefung herausragt. Damit wird eine sichere Verbindung und exakte Ausrichtung zwischen dem Stützelement und dem Grundkörper gewährleistet. Durch den herausragenden Teil des Stützelementes wird gewährleistet, dass sich der Grundkörper nicht direkt, sondern nur indirekt über das Stützelement auf der Rundkammwelle abstützt. Dabei ist es möglich durch eine Verschiebung zwischen dem Stützelement und dem Grundkörper in radialer Richtung zur Rundkammwelle, den Hüllkreisradius zu verändern, bzw. einzustellen.

Um eine einfache und präzise Einstellmöglichkeit des Hüllradius der Kämmgarnitur zu ermöglichen, wird weiter vorgeschlagen, dass zwischen der ersten Stützfläche des Stützelementes und der Grundfläche der Vertiefung wenigstens ein austauschbares Abstandselement angeordnet ist. Damit ist es möglich, durch einfaches Einlegen von präzisen Abstandselementen zwischen dem Grundkörper und dem Stützelement den Radius des Hüllkreises der Kämmgarnitur exakt einzustellen.

Durch den weiteren Vorschlag, die Grundfläche der Vertiefung und die erste Stützfläche des Stützelementes als ebene Flächen auszubilden, kann auch das, zwischen diesen Flächen eingesetzte Distanzelement als gerades und ebenes Flächenelement ausgebildet werden. Dadurch ist es möglich, dieses Distanzelement durch übliche Fertigungsmethoden mit einem exakten Dickenmass herzustellen, um den Hüllkreisradius in kleinsten Schritten variieren, bzw. einzustellen zu können. Das ermöglicht, den Abstand zwischen der unteren Zangenplatte und dem Hüllkreis der Kämmgarnitur auf den kleinsten möglichen Abstand einzustellen, um eine optimale Auskämmung des, aus der Zange herausragenden Faserbartes zu erzielen. Durch den Austausch der beschriebenen, ebenen Distanzelemente entstehen keine Spannungen zwischen dem Grundkörper und dem Stützelement, da sich die geometrischen Verhältnisse im Bereich der Auflagen nicht verändern.

Des Weiteren wird vorgeschlagen, dass das Massenausgleichselement einen in Richtung der Welle zeigenden konvexen Abschnitt aufweist über welchen es auf einer Teilumfangsfläche der Welle aufliegt. Damit wird eine kompakte Bauweise erzielt, wobei das Profil des Grundelementes und das Massenausgleichselement die Rundkammwelle rundum umschliessen kann und sich beide Elemente zu einer geschlossenen Einheit um die Rundkammwelle zusammenfügen lassen.

Vorteilhafterweise wird weiter vorgeschlagen, dass das Hohlprofil des Grundkörpers mit in seiner Längsrichtung und innerhalb des Hohlprofils verlaufenden Stegen versehen ist, welche das Hohlprofil in dreieckförmige Hohlräume aufteilen. Damit kann die Wandstärke des Hohlprofils gering gehalten werden, da die Übertragung der Kräfte über die dreieckförmigen Hohlräume optimal (bedingt durch die Statik und die wabenförmige Anordnung) über das Stützelement auf die Abstützung auf der Rundkammwelle übertragen werden können.

Durch den weiteren Vorschlag, dass die Welle mit mehreren, quer zur Längsachse der Welle verlaufenden Durchgangsöffnungen versehen ist, durch welche die Befestigungsmittel hindurchragen wird gewährleistet, dass sich das Massenträgheitsmoment durch die Anbringung der Befestigungsmittel nur unwesentlich erhöht, da sie durch die Drehachse der Welle ragen.

Um die Massenträgheit auf einem niedrigen Niveau zu halten kann das Hohlprofil des Grundkörpers aus einem Material mit einem niedrigen spezifischen Gewicht hergestellt sein. Das Hohlprofil des Grundkörpers kann z. B. aus einem Aluminium-Strangpressprofil hergestellt sein.

Sofern jedoch Gewindebohrungen in diesem Teil zur direkten Aufnahme von Befestigungselementen (z. B. Schrauben) vorgesehen sind, kann es vorkommen, dass es zu Verformungen in den Gewindebohrungen führt, wenn grosse Zugkräfte darin aufgenommen werden müssen. Um dies auszuschliessen wird weiter vorgeschlagen, dass innerhalb des Hohlprofils im Bereich des inneren Abschnittes wenigstens ein zusätzliches Mittel gelagert ist, welches mit Gewindebohrungen zur Aufnahme der Befestigungsmittel versehen ist, wobei das zusätzliche Mittel eine höhere Festigkeit als das Hohlprofil aufweist.

Vorzugsweise sind die Befestigungsmittel Schrauben, welche in Gewindebohrungen des Hohlprofils ragen. Das ermöglicht eine einfache und sichere Befestigung des Hohlprofils über das Stützelement und des Gegengewichtes auf der Rundkammwelle. Die Krafteinleitung durch die Schrauben erfolgt hierbei unmittelbar im Bereich der Klemmflächen, mit welchen das Hohlprofil über das Stützelement und das Gegengewicht auf der Rundkammwelle aufliegen.

Zur Fixierung der Winkelposition des Grundkörpers und des Massenausgleichselementes auf der Rundkammwelle wird weiter vorgeschlagen, dass die Befestigungsmittel Schrauben sind und wenigstens eine der Schrauben eine Passschraube ist, deren Schraubenschaft durch Passbohrungen des Massenausgleichselementes, der Welle und des Grundkörpers ragen.

Um keine unkontrollierten Luftströmungen durch die Aussenkontur des Rundkammes zu erzeugen und den Rundkamm selbst gegen Verschmutzungen (wie Faserflug) zu schützen kann vorgesehen sein, dass die Aussenflächen des Hohlprofils und des Massenausgleichselementes eine geschlossene Umfangsfläche bilden.

Um eine exakte Positionierung des Kämmsegmentes und des Ausgleichselementes gegenüber einem schwenkbaren Zangenaggregat einhalten zu können, kann vorgesehen sein, dass das Massenausgleichselement und die Welle mit Nuten versehen sind, über welche das Massenausgleichselement und die Welle unter Verwendung von Federn in einer fixen Position in Umfangsrichtung der Welle positioniert wird. Die Winkelstellung der Rundkammwelle und die Stellung der Antriebswelle des Zangenaggregates können hiermit exakt aufeinander abgestimmt werden.

Zur Sauberhaltung des Innenraumes des Hohlprofils können an beiden Enden des Hohlprofils zum Verschliessen des Hohlraumes Abdeckungen befestigt sind.

Damit das Hohlprofil des Grundkörpers (z. B. für einen Austausch) unabhängig vom Massenausgleichselement von der Rundkammwelle entfernt werden kann, kann vorgesehen sein, dass das Massenausgleichselement über zusätzliche Befestigungsmittel mit der Welle verbunden ist. Das heisst, nach dem Lösen der Befestigungsmittel, welche das Massenausgleichselement und den Grundkörper gegen die Rundkammwelle verspannen, kann der Grundkörper von der Rundkammwelle entfernt werden, während das Massenausgleichselement über die zusätzlichen Befestigungsmittel noch auf der Rundkammwelle gehalten wird. Damit wird die Montage und Demontage erleichtert.

Damit das Stützelement mit dem Hohlprofil des Grundkörpers vormontiert werden kann, wird weiter vorgeschlagen, dass das Stützelement über zusätzliche Befestigungsmittel mit dem Grundkörper verbunden ist. Bei dieser Vormontage können auch schon entsprechende Distanzelemente zwischen dem Hohlprofil des Grundkörpers und dem Stützelement eingesetzt werden.

Weitere Vorteile der Erfindung werden in nachfolgenden Ausführungsbeispielen näher aufgezeigt und beschrieben.

Es zeigen:
- Fig.1: eine schematische Teil-Seitenansicht eines Kämmkopfes einer Kämmmaschine
- Fig.2: eine schematische Seitenansicht eines erfindungsgemäss ausgebildeten Rundkammes.
- Fig.3: eine Schnittdarstellung C-D nach Fig.2
- Fig.4: ein weiteres Ausführungsbeispiel nach Fig.2
- Fig.4a: ein weiteres Ausführungsbeispiel nach Fig.4
- Fig.5: eine Schnittdarstellung E-F nach Fig.4

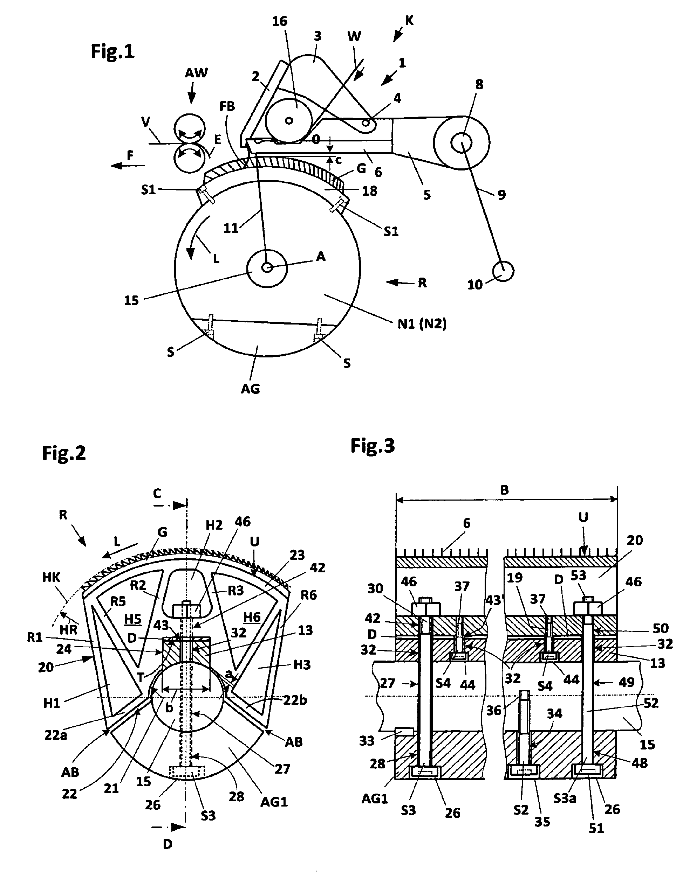

Figur 1 zeigt eine schematische Seitenansicht eines Kämmkopfes K einer Kämmmaschine. Bei bekannten Kämmmaschinen sind z. B. acht solcher Kämmköpfe K nebeneinander angeordnet. Der Kämmkopf K, von welchem nur ein Teil der Elemente dargestellt ist, weist ein Zangenaggregat 1 auf, welches über die Schwenkarme 9, 11 um die Achsen 10, 15 hin und her schwenkbar im Rahmen der Kämmmaschine gelagert ist. Die Achse 10, welche auch Zangenwelle genannt wird, wird von einem nicht näher gezeigten Antrieb angetrieben, um dem Zangenaggregat 1 eine Hin- und Her Bewegung zu verleihen. Die Achse 15 entspricht der Rundkammwelle, auf welcher ein Rundkamm R drehfest befestigt ist. Die Rundkammwelle 15 mit ihrer Mittelachse A wird ebenfalls von einem nicht gezeigten Antrieb kontinuierlich oder diskontinuierlich angetrieben. Der unterhalb des Zangenaggregates 1 auf der Rundkammwelle 15 befestigte Rundkamm R besteht bei der gezeigten bekannten Lösung aus zwei im Abstand zueinander fix auf der Rundkammwelle 15 befestigten Naben N1, N2, an dessen Aussenumfang einerseits ein Grundkörper 18 und andererseits ein Massenausgleichselement AG befestigt ist. Die Befestigung des Massenausgleichselementes (kurz Ausgleichselement genannt) erfolgt wie schematisch dargestellt über die Schrauben S, über welche es an den Naben N1, N2 befestigt ist. Der Grundkörper 18 ist ebenfalls über schematisch dargestellte Schrauben S1 mit den Naben N1, N2 fest verbunden. Oberhalb des Grundkörpers 18, welcher sich, wie das Ausgleichselement AG, über die gesamte Breite B des Rundkammes R erstreckt, ist eine Garnitur G befestigt. Der Umfangswinkel der Kämmgarnitur G beträgt bei bekannten Kämmmaschinen etwa 90 Grad und wird auch als "Kämmwinkel" bezeichnet.

Das Zangenaggregat wird gebildet aus einem Zangenrahmen 5, an welchem eine untere Zangenplatte 6 befestigt ist. Auf dem Zangenrahmen 5 ist um eine Schwenkachse 4 und Schwenkarmen 3 eine obere Zangenplatte 2 schwenkbar gelagert. In der gezeigten Ausführungsform ist das Zangenaggregat 1 geschlossen, wobei der aus der Klemmstelle des Zangenaggregates herausragende Faserbart FB von der Garnitur G erfasst und ausgekämmt wird. An den Schwenkarmen 3 greifen nicht gezeigte Belastungsmittel (z. B. Federn) an, welche einerseits die Schwenkbewegung der oberen Zangenplatte 2 kontrollieren und andererseits eine notwendige Klemmkraft in der Klemmstelle des Zangenaggregates 1 erzeugen. Ebenfalls im Zangenrahmen 5 ist oberhalb der unteren Zangenplatte 6 eine Speisewalze 16 drehbar gelagert, welche z. B. von einem nicht gezeigten Klinkenantrieb schrittweise angetrieben wird. Über diese Speisewalze 16 wird eine dem Zangenaggregat 1 zugeführte Watte W (oder einzelne Faserbänder) der Klemmstelle des Zangenaggregates zugeführt. Nach erfolgtem Auskämmvorgang des Faserbartes FB wird das Zangenaggregat 1 in Richtung eines nachfolgenden Abreisswalzenpaare AW verschwenkt. Bei diesem Schwenkvorgang öffnet sich das Zangenaggregat und das ausgekämmte Ende der Watte W bzw. der Faserbart FB wird auf das Ende E eines zuvor gebildeten Faservlieses V aufgelegt und unter Einwirkung der Klemmstelle der Abreisswalzen AW mit diesem verlötet und in Förderrichtung F abtransportiert.

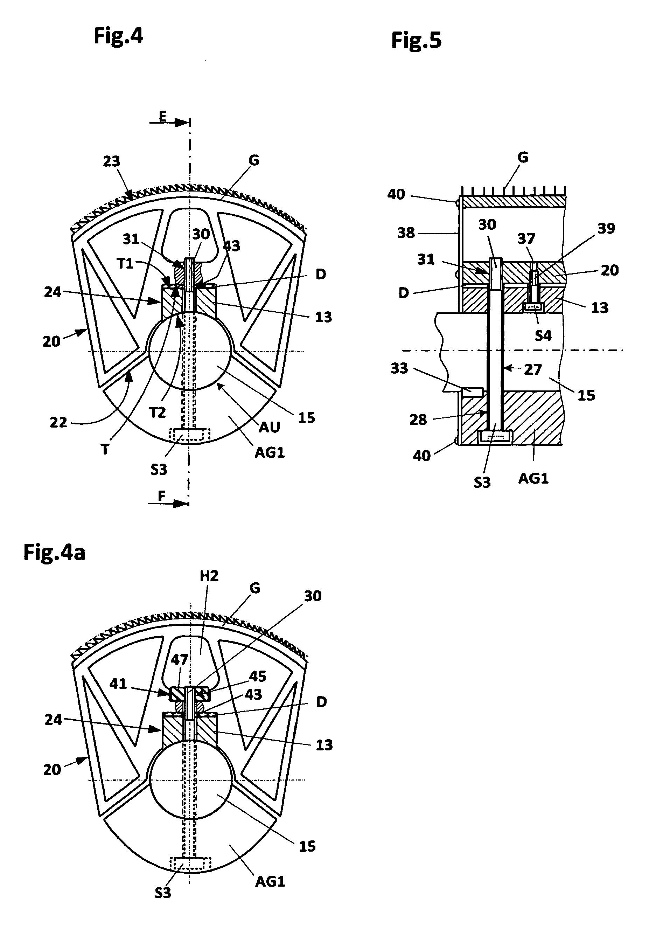

Figur 2 zeigt ein Ausführungsbeispiel eines erfindungsgemäss ausgebildeten Rundkammes R, wobei der hier gezeigte Grundkörper 20 als Hohlprofil ausgebildet ist, welches eine halbkreisförmige Mulde 21 aufweist, die der Rundkammwelle 15 gegenübersteht. In der Mulde 21 ist eine nutförmige Vertiefung 24 angebracht, die eine Breite b und eine ebene Grundfläche T aufweist. Innerhalb der Vertiefung 24 befindet sich ein Stützelement 13, dessen Breite etwa der Breite b der Vertiefung 24 entspricht. Wie aus der Schnittdarstellung C-D der Fig.3 zu entnehmen erstreckt sich das Stützelement 13 über die gesamte Breite B des Rundkammes R. Zwischen einer ersten Stützfläche T1 (siehe Fig.4) des Stützelementes 13 und der Grundfläche T der Vertiefung 24 befindet sich ein austauschbares Distanzelement D über welches der Hüllkreisradius HR des Hüllkreises HK der Kämmgarnitur G gegenüber der Achse der Rundkammwelle 15 eingestellt, bzw. verändert werden kann. Diese Einstellung erfolgt durch Austausch des eingesetzten Distanzelementes D gegen ein anderes Distanzelement mit einem anderen Dickenmass oder durch den Einsatz von zusätzlichen Distanzelementen. Damit kann der Abstand c zwischen dem Hüllkreis HK der Kämmgarnitur G und der unteren Zangenplatte 6 exakt auf ein Mindestmass eingestellt werden, um den Faserbart möglichst optimal zu erfassen und auszukämmen. D.h. man versucht den Abstand c so klein wie möglich einzustellen, um eine fast vollständige Auskämmung des aus der Zange herausragenden Faserbartes FB zu erzielen. Das Stützelement 13 ragt in Bezug auf die Mulde 21 um ein Mass a über die Mulde hinaus. Somit wird sichergestellt, dass sich der Grundkörper 20 nicht über die Mulde 21, sondern über die zweite Stützfläche T2 des Stützelementes auf einem Teilbereich der Umfangsfläche AU der Welle 15 abstützt. Die Mulde 21, bzw. die Vertiefung 24 befindet sich an einem inneren Abschnitt 22 des Grundkörpers 20, auf welchem sich ein äusserer Abschnitt 23 über die Rippen R1 bis R6 abstützt. Zwischen den Rippen R1 bis R6 und dem inneren und äusseren Abschnitt 22, 23 werden Hohlräume H1 bis H6 gebildet. Wie z. B. aus der Figur 3 zu entnehmen ist, liegt die Mulde 21 über das Stützelement 13 über die gesamte Breite B des Rundkammes R auf der Umfangsfläche AU der Rundkammwelle 15 auf. Auch die Abschnitte 22, 23 und die Rippen R1 bis R6 erstrecken sich über die Breite B des Rundkammes R. Um zusätzlich die Masse des Grundkörpers 20 zu reduzieren, wäre es denkbar die Rippen R1 bis R6 mit über die Breite B des Rundkammes R verteilten Durchbrüchen, bzw. Öffnungen zu versehen.

Durch die gezeigte Ausbildung des Grundkörpers 20 als wabenförmiges Hohlprofil kann insbesondere die Dicke d des äusseren Abschnittes 23 des Grundkörpers 20 gering ausgeführt werden, ohne dass die geforderte Stabilität und Festigkeit des Grundkörpers wesentlich verringert wird. Dadurch kann der Grundkörper 20 in dem Bereich (äusserer Abschnitt 23), welcher am weitesten von der Drehachse A der Rundkammwelle 15 entfernt ist, mit einer relativ geringen Masse ausgebildet werden. Damit wird auch das Massenträgheitsmoment erheblich verringert. Daraus resultiert, dass der Kämmwinkel gegenüber bekannten Lösungen vergrössert werden kann, ohne dass es in Bezug auf bekannte Lösungen zu einem überhöhten Massenträgheitsmoment führt. D. h. es wäre z. B. möglich den Kämmwinkel der Garnitur G auf 130° und mehr zu vergrössern, ohne dass es zu einer Erhöhung des Massenträgheitsmomentes führt, welches z.B. bei der in Figur 1 gezeigten Ausführung mit einem Kämmwinkel in Höhe von 90° vorhanden ist. Auf der Umfangsfläche U des äusseren Abschnittes 23 des Grundkörpers 20 ist eine Kämmgarnitur G befestigt.

Im vorliegenden Beispiel (Fig.2 bis Fig.5) ist der Grundkörper 20 im Bereich des inneren Abschnittes 22 V-förmig ausgebildet. D. h. die von der Mulde 21 nach aussen verlaufenden Stege 22a und 22b bilden eine V-förmige Aufnahme für das ebenfalls auf einem Teilumfang und längs der Breite B auf der Welle 15 aufliegende Massenausgleichselement (kurz Ausgleichselement genannt) AG1. Zwischen der äusseren Kontur des Ausgleichselementes AG1 und den Stegen 22a, 22b ist ein kleiner Abstand AB vorgesehen. Damit wird erreicht, dass der Grundkörper 20 im Bereich der Mulde 21 über die Stützfläche T2 des Stützelementes 13 und das Ausgleichselement AG1 im Bereich seines muldenförmigen, konvexen Abschnittes 25 vollständig auf dem Aussenumfang der Rundkammwelle 15 zum Anliegen kommen. Die äussere Kontur K des Ausgleichselementes AG1 schliesst an die äussere Kontur der Rippen R1, R6 des Grundkörpers 20 an, womit eine geschlossene Umfangsfläche des Rundkammes R (ohne Absätze) gebildet wird. Damit wird erreicht, dass durch die äussere Form des Rundkammes R keine unerwünschten Luftzirkulationen entstehen können. Ausserdem wird damit ein Festsetzen von Verunreinigungen (Faserflocken) im Umfangsbereich des Rundkammes weitgehend unterbunden.

Zur Befestigung des Grundkörpers 20 mit dem Stützelement 13 und des Ausgleichselementes AG1 auf der Rundkammwelle 15 (kurz Welle genannt) ist die Welle mit mehreren - über die Breite B des Rundkammes R gesehen - Durchgangsbohrungen 27 versehen, durch welche Schrauben S3 ragen. Der Kopf der jeweiligen Schraube S3 liegt in einer Vertiefung 26 des Ausgleichselementes AG1 auf. Des Weiteren ist im Ausgleichselement AG1 eine Durchgangsbohrung 28 vorgesehen, welche mit der Bohrung 27 der Welle 15 fluchtet. Ebenso ist im Ausführungsbeispiel der Fig.2 das Stützelement 13 mit Durchgangsbohrungen 32, das Distanzelement D mit Bohrungen 43 und der Grundkörper 20 mit Durchgangsbohrungen 42 versehen, die mit den Bohrungen 27 der Welle 15 fluchten und durch welche die jeweilige Schraube S3 hindurchragt. Das Ende der jeweiligen Schraube S3 weist ein Gewinde 30 auf, welches die Bohrung 42 des Grundkörpers 20 im Bereich des Hohlraumes H2 überragt. Auf dem Gewinde 30 ist eine Mutter 46 angebracht. Durch das Anziehen der Schrauben S3 und das Eindrehen in die Gewindebohrung der Mutter 46 werden der Grundkörper 20 mit dem Stützelement 13 und das Ausgleichselement AG1 gegeneinander gedrückt und auf der Welle 15 über die Stützfläche T2 (siehe Fig.4) des Stützelementes 13 und den Muldenförmigen Abschnitt 25 auf der Welle 15 fest geklemmt.

Anstelle der Mutter 46 könnte auch ein anderes Element, das mit einer Gewindebohrung versehen ist zur Anwendung kommen. Eine derartige Ausführung wird z.B. in Fig.4a gezeigt, wobei sich ein Gewindeelement 47 in einer Vertiefung 41 des Grundkörpers 20 im Bereich des Hohlraumes H2 befindet. Durch den teilweisen Formschluss zwischen dem Gewindeelement 47 und der Vertiefung 41 wird das Gewindeelement - in radialer Richtung zur Schraube S3 - fixiert, wodurch ein Blockieren (wie z.B. beim Einsatz der Mutter 46) dieses Elementes über ein spezielles Werkzeug beim Festziehen der Schraube S3 nicht mehr notwendig ist. Das Gewindeelement 47 kann eine höhere Festigkeit (spezifisches Gewicht) als der Grundkörper 20 aufweisen, womit eine Verformung des Gewindes 45 durch die Zugkraft der Schrauben S3 vermieden wird.

Wie schematisch in Figur 3 dargestellt ist, kann das Ausgleichselement AG1 mit einer Längsnut versehen sein, welche unter Verwendung einer Feder mit einer gegenüberliegenden Längsnut in der Welle 15 eine Nut-Federverbindung 33 bildet, über welche die Winkelposition des Ausgleichselementes AG1 und somit auch des Grundkörpers 20 exakt eingehalten werden kann. Damit kann gewährleistet werden, dass eine vorgegebene Winkelposition des Kämmsegmentes G zur entsprechenden Position des Zangenaggregates 1 exakt definiert werden kann.

Wie ebenfalls aus Figur 3 zu entnehmen, sind mehrere solcher Schraubverbindungen mit den Schrauben S3 über die Breite B des Rundkammes R angeordnet. Damit wird gewährleistet, dass der Grundkörper 20 über das Stützelement 13 und auch das Ausgleichsgewicht AG1 gleichmässig und über die gesamte Breite B des Rundkammes R auf der Welle 15 aufliegt, bzw. abgestützt wird.

Wie schematisch aus Figur 3 zu entnehmen, ist das Ausgleichselement AG1 mit weiteren (nur eine gezeigt) Durchgangsbohrungen 34 und Vertiefungen 35 versehen, durch welche Schrauben S2 ragen. Die Enden der jeweiligen Schrauben sind mit einem Gewinde versehen, welches in eine Gewindebohrung 36 mündet, die in der Welle 15 vorgesehen ist. Diese Gewindebohrung 36 ist nicht durchgängig und erstreckt sich nur über einen Teil des Durchmessers der Welle 15. Diese zusätzliche Verschraubungen mit den Schrauben S2 ermöglichen das unabhängige Befestigen des Ausgleichsgewichtes AG1 an der Welle 15. D. h., der Grundkörper 20, mit dem Stützelement 13 und mit der, auf dem Grundkörper befestigten Kämmgarnitur G, kann vollständig nach Lösen der Schrauben S3 von der Welle 15 entfernt werden, während das Ausgleichsgewicht AG1 über die Verschraubungen S2 (nur eine in Fig.3 gezeigt) noch an der Welle 15 befestigt sind. Das ermöglicht einen einfachen und schnellen Austausch des Grundkörpers 20 mit der Kämmgarnitur G, ohne dass das Ausgleichselement AG1 ebenfalls demontiert werden muss.

Wie schematisch in der Fig.5 dargestellt ist, ist auf den Stirnseiten des Grundkörpers 20 ist jeweils eine Abdeckung 38 angebracht, welche über schematisch angedeutete Schraubverbindungen 40 befestigt ist. Mit diesen Abdeckungen (nur eine Seite gezeigt) können insbesondere die Hohlräume H1 bis H6 des Grundkörpers 20 nach aussen abzuschotten werden. Diese Abdeckungen 38 können aus leichtem Material (Kunststoff) hergestellt sein, da diese nur die Aufgabe haben ein Eindringen von Verschmutzungen (z. B. Faserflug) in den Hohlraum des Grundkörpers 20 zu verhindern.

In einem weiteren Ausführungsbeispiel nach Figur 4 wird eine abgewandelte Ausführung nach Figur 2 gezeigt. Im Anschluss an die Grundfläche T der Vertiefung 24 ist der Grundkörper 20 mit einer Gewindebohrung 31 versehen, in welche das, mit einem Gewinde 30 versehene Ende der Schraube S3 hineinragt. Um die Gefahr einer Verformung des Gewindes (im spezifisch leichteren Werkstoff des Grundkörpers) beim Verspann Vorgang über die Schrauben S3 zu vermeiden ist die Gewindelänge entsprechend auszulegen und zu dimensionieren.

In der Schnittdarstellung C-D der Fig.2 wird in Fig. 3 im rechten Teil der Darstellung eine weitere Ausführung bezüglich der Befestigungsmöglichkeit vom Grundkörper 20 mit dem Stützelement 13 und dem Ausgleichsgewicht AG1 auf der Welle 15 gezeigt. Dabei wird anstelle der im linken Teil von Fig.3 gezeigten Schraube S3, welche durch, im Durchmesser grössere Durchgangsbohrungen hindurchragt, die Verwendung einer Passschraube S3a vorgeschlagen, welche mit ihrem Schraubenschaft 52 durch die Passbohrungen 48, 49 und 50 des Ausgleichsgewichtes AG1, der Welle 15 und des Grundkörpers 20 hindurch ragt und mit diesen eine spielfreie Passung bildet. Damit wird gewährleistet, dass die Winkelpositionen des Grundkörpers 20 und des Ausgleichsgewichtes AG1 auf der Rundkammwelle 15 exakt zueinander fixiert sind. Die Bohrung 32 des Stützelementes 13 und die Bohrung 43 des Distanzelementes D, sind dabei nicht als Passbohrungen ausgeführt und weisen einen etwas grösseren Durchmesser als der Schaft der jeweiligen Passschraube S3a auf. Durch die Verwendung einer Passschraube S3a entfällt die Fixierung durch eine Nut-Federverbindung 33, wie sie in Fig.3 in dem linken Teilabschnitt angedeutet und beschrieben wurde. Es wäre auch eine Ausführung denkbar, wobei der Einsatz von Passschrauben S3a und von Durchgangsschrauben S3 miteinander kombiniert werden.

Der Schraubenkopf 51 der Passschraube S3a liegt in einer Vertiefung 26 des Ausgleichsgewichtes AG1 auf. Das Ende der Passschraube S3a ist mit einem Gewindezapfen 53 versehen, der in den Hohlraum H2 hineinragt und auf welchem eine Mutter 46 angebracht ist. Die Verspannung des Grundkörpers 20 mit dem Stützelement 13 und dem Ausgleichsgewicht AG1 auf der Welle 15 erfolgt wie im Ausführungsbeispiel der Fig. 2 bereits beschrieben wurde.

Damit der Grundkörper 20 mit dem Stützelement 13 und eventuell notwendigen Distanzelementen D vormontiert werden kann, sind (Fig.3) zusätzliche Schrauben S4 vorgesehen, dessen Schraubenköpfe in Vertiefungen 44 des Stützelementes 13 aufliegen. Im Anschluss an die Vertiefungen 44 sind Durchgangsbohrungen 32 angebracht, durch welche die Schrauben S4 hindurchragen. Diese Schrauben ragen ebenfalls durch eine Bohrung 43' des Distanzelementes D hindurch und münden mit Gewinde 19 in eine Gewindebohrung 37 des Grundkörpers 20. Damit ist es auch möglich, nach Lösen er Muttern 46, bzw. der Schrauben S3, den Grundkörper 20 mit dem Stützelement 13 (und eventuell vorhandenen Distanzelementen D) komplett als Baueinheit von der Rundkammwelle 15 zu lösen, während das Ausgleichsgewicht AG1 über die Schrauben S2 noch auf der Rundkammwelle befestigt ist. Eventuell sind noch die Schrauben 40 für die Befestigung der seitlichen Abdeckung 38 zu lösen. Nach dem Lösen der Schrauben S4 der besagten demontierten Baueinheit können Distanzelemente D ausgetauscht oder ergänzt werden. Ebenso ist es auch möglich den Grundkörper mit der Kämmgarnitur gegen einen anderen Grundkörper 20 mit einer anderen Kämmgarnitur G' auszutauschen, wobei das bisher eingesetzte Stützelement 13 wieder verwendet wird.

Daraus ergibt sich ein Baukastensystem, mit welchen es möglich ist, den Rundkamm schnell und einfach auf unterschiedliche Erfordernisse zu ändern, bzw. anzupassen. Sofern die Kämmgarnitur extern nachzuschleifen ist, kann die bisher eingesetzte Baueinheit (Grundkörper, Stützelement, Distanzelement) gegen eine bereitliegende Baueinheit schnell ausgetauscht werden. Damit wird die Produktivität der Kämmmaschine erhalten, bzw. erhöht.

## Patentansprüche

1. Rundkamm (R) für eine Kämmmaschine mit einem, aus einem Hohlprofil gebildeten Grundkörper (18, 20), welcher auf einem äusseren, Kreisbogenförmigen Abschnitt (23) eine Kämmgarnitur (G) trägt und drehfest auf einer Welle (15) befestigt ist, wobei - in radialer Richtung der Welle gesehen - auf der, der Kämmgarnitur (G) gegenüberliegenden Seite der Welle (15) ein Massenausgleichselement (AG, AG1) befestigt ist, **dadurch gekennzeichnet, dass** der Grundkörper (20) mit einem, zur Welle (15) hin ragenden inneren Abschnitt (22) versehen ist, welcher eine, in Richtung zur Welle hin offene, in Längsrichtung des Hohlprofils erstreckende Vertiefung (24) aufweist, in welcher ein Stützelement (13) aufgenommen ist, das sich einerseits über eine erste Stützfläche (T1) auf einer Grundfläche (T) der Vertiefung (24) und andererseits über eine zweite Stützfläche (T2) auf dem Aussenumfang (AU) der Welle (15) abstützt und Befestigungsmittel (S3, S3a) vorgesehen sind, mit welchen der Grundkörper (20) über das Stützelement (13) und das Massenausgleichselement (AG1) gegeneinander quer zur Längsrichtung der Welle (15) verspannt werden.

2. Rundkamm (R) nach Anspruch 1, **dadurch gekennzeichnet, dass** die Vertiefung (24) und das Stützelement (13) miteinander einen Formschluss bilden, wobei das Stützelement (13) zumindest teilweise aus der Vertiefung (24) herausragt.

3. Rundkamm (R) nach einem der Ansprüche 1 bis 2, **dadurch gekennzeichnet, dass** zwischen der ersten Stützfläche (T1) des Stützelementes (13) und der Grundfläche (T) der Vertiefung (24) wenigstens ein austauschbares Abstandselement (D) angeordnet ist.

4. Rundkamm nach einem der Ansprüche 1 bis 3, **dadurch gekennzeichnet, dass** die Grundfläche (T) der Vertiefung und die erste Stützfläche (T1) des Stützelementes (13) als ebene Flächen ausgeführt sind.

5. Rundkamm (R) nach einem der Ansprüche 1 bis 4, **dadurch gekennzeichnet, dass** das Massenausgleichelement (AG1) einen in Richtung der Welle (15) zeigenden konvexen Abschnitt (25) aufweist über welchen es auf einer Teilumfangsfläche (AU) der Welle (15) aufliegt.

6. Rundkamm (R) nach einem der Ansprüche 1 bis 4, **dadurch gekennzeichnet, dass** das Hohlprofil des Grundkörpers (20) mit in seiner Längsrichtung und innerhalb des Hohlprofils verlaufenden Stegen (R2, R3, R5) versehen ist, welche das Hohlprofil in dreieckförmige Hohlräume (H1, H2, H3, H5, H6) aufteilen.

7. Rundkamm (R) nach einem der Ansprüche 1 bis 4, **dadurch gekennzeichnet, dass** die Welle (15) mit mehreren, quer zur Längsachse der Welle (15) verlaufenden Durchgangsöffnungen (27) versehen ist, durch welche die Befestigungsmittel (S3) hindurchragen.

8. Rundkamm (R) nach Anspruch 6, **dadurch gekennzeichnet, dass** innerhalb des Hohlprofils (20) im Bereich des inneren Abschnittes (22) wenigstens ein zusätzliches Mittel (47) gelagert ist, welches mit Gewindebohrungen (45) zur Aufnahme der Befestigungsmittel (S3) versehen ist, wobei das zusätzliche Mittel (47) eine höhere Festigkeit als das Hohlprofil (20) aufweist.

9. Rundkamm (R) nach Anspruch 6, **dadurch gekennzeichnet, dass** die Befestigungsmittel Schrauben (S3) sind, welche in Gewindebohrungen (31) des Hohlprofils (20) ragen.

10. Rundkamm (R) nach einem der Ansprüche 1 bis 8, **dadurch gekennzeichnet, dass** die Befestigungsmittel Schrauben (S3, S3a) sind und wenigstens eine der Schrauben (S3a) eine Passschraube ist, deren Schraubenschaft (52) durch Passbohrungen (48, 49, 50) des Massenausgleichselementes (AG1), der Welle (15) und des Grundkörpers (20) ragen.

11. Rundkamm nach einem der Ansprüche 1 bis 4, **dadurch gekennzeichnet, dass** das Stützelement (13) über zusätzliche Befestigungsmittel (54) mit dem Grundköper (20) verbunden ist.

## Claims

1. A circular comb (R) for a combing machine having a base body (18, 20) formed from a hollow profile which carries a comb clothing (G) on an outer circular-arc-shaped section (23) and is fixed to a shaft (15) in a fixed rotational relationship, wherein - when viewed in the radial direction of the shaft - a mass balancing element (AG, AG1) is fixed on the side of the shaft (15) opposite the comb clothing (G), **characterized in that** the base body (20) is provided with an inner section (22) projecting towards the shaft (15) which has a depression (24) which is open in the direction of the shaft and extends in the longitudinal direction of the hollow profile and in which is accommodated a supporting element (13), which, on the one hand, is supported by means of a first supporting surface (T1) on a base surface (T) of the depression (24) and, on the other, by means of a second supporting surface (T2) on the outer circumference (AU) of the shaft (15), and fixing means (S3, S3a) are provided with which the base body (20), via the supporting element (13), and the mass balancing element (AG) are clamped against one another perpendicular to the longitudinal direction of the shaft.

2. The circular comb (R) as claimed in claim 1, **characterized in that** the depression (24) and the supporting element (13) together form a positive fit, wherein the supporting element (13) projects at least partially out of the depression (24).

3. The circular comb (R) as claimed in one of claims 1 to 2, **characterized in that** at least one replaceable spacer (D) is arranged between the first supporting surface (T1) of the supporting element (13) and the base surface (T) of the depression (24).

4. The circular comb as claimed in one of claims 1 to 3, **characterized in that** the base surface (T) of the depression and the first supporting surface (T1) of the supporting element (13) are designed as flat surfaces.

5. The circular comb (R) as claimed in one of claims 1 to 4, **characterized in that** the mass balancing element (AG1) has a convex section (25) facing in the direction of the shaft (15), by means of which it rests on a partial circumferential surface (AU) of the shaft (15).

6. The circular comb (R) as claimed in one of claims 1 to 4, **characterized in that** the hollow profile of the base body (20) is provided with webs (R2, R3, R5) running in its longitudinal direction and within the hollow profile which divide the hollow profile into triangular hollow spaces (H1, H2, H3, H5, H6).

7. The circular comb (R) as claimed in one of claims 1 to 4, **characterized in that** the shaft (15) is provided with a plurality of through-openings (27) running perpendicular to the longitudinal axis of the shaft (15) through which openings the fixing means (S3) project.

8. The circular comb (R) as claimed in claim 6, **characterized in that** at least one additional means (47), which is provided with threaded holes (45) for receiving the fixing means (S3), is mounted within the hollow profile (20) in the region of the inner section (22), wherein the additional means (47) has a greater strength than the hollow profile (20).

9. The circular comb (R) as claimed in claim 6, **characterized in that** the fixing means are screws (S3) which project into threaded holes (31) in the hollow profile (20).

10. The circular comb (R) as claimed in one of claims 1 to 8, **characterized in that** the fixing means are screws (S3, S3a) and at least one of the screws (S3a) is a set screw, the screw shaft (52) of which projects through locating holes (48, 49, 50) of the mass balancing element (AG1), the shaft (15) and the base body (20).

11. The circular comb as claimed in one of claims 1 to 4, **characterized in that** the supporting element (13) is connected to the base body (20) by means of additional fixing means (S4).

## Revendications

1. Peigne circulaire (R) pour une peigneuse, comprenant un corps de base (18, 20) formé à partir d'un profil creux, portant sur une section extérieure en forme d'arc de cercle (23) une garniture de peigne (G) et fixé sur un arbre de manière verrouillée en rotation (15), dans lequel - vu dans le sens radial de l'arbre - du côté de l'arbre (15) opposé à la garniture de peigne (G), est fixé un élément d'équilibrage des masses (AG, AG1), **caractérisé en ce que** le corps de base (20) est muni d'une section (22) intérieure faisant saillie vers l'arbre (15) et présentant un évidement (24) ouvert en direction de l'arbre, s'étendant dans la direction longitudinale du profil creux, et dans lequel est reçu un élément d'appui (13) qui repose d'une part par l'intermédiaire d'une première surface d'appui (T1) sur une surface de base (T) de l'évidement (24) et d'autre part par l'intermédiaire d'une deuxième surface d'appui (T2) sur une circonférence extérieure (AU) de l'arbre (15), et des moyens de fixation (S3, S3a) sont prévus avec lesquels le corps de base (20), par l'intermédiaire de l'élément d'appui (13), et l'élément d'équilibrage des masses (AG1) sont calés l'un par rapport à l'autre transversalement à la direction longitudinale de l'arbre (15).

2. Peigne circulaire (R) selon la revendication 1, **caractérisé en ce que** l'évidement (24) et l'élément d'appui (13) forment ensemble un engagement positif, dans lequel l'élément d'appui (13) dépasse au moins en partie de l'évidement (24).

3. Peigne circulaire (R) selon l'une quelconque des revendications 1 à 2, **caractérisé en ce qu'**au moins un écarteur (D) interchangeable est disposé entre la première surface d'appui (T1) de l'élément d'appui (13) et la surface de base (T) de l'évidement (24).

4. Peigne circulaire (R) selon l'une quelconque des revendications 1 à 3, **caractérisé en ce que** la surface de base (T) de l'évidement et la première surface d'appui (T1) de l'élément d'appui (13) sont réalisées sous forme de surfaces planes.

5. Peigne circulaire (R) selon l'une quelconque des revendications 1 à 4, **caractérisé en ce que** l'élément d'équilibrage des masses (AG1) présente une section convexe (25) orientée en direction de l'arbre (15) et par laquelle il repose sur une surface circonférentielle partielle (AU) de l'arbre (15).

6. Peigne circulaire (R) selon l'une quelconque des revendications 1 à 4, **caractérisé en ce que** le profil creux du corps de base (20) est muni d'entretoises (R2, R3, R5) s'étendant dans sa direction longitudinale et à l'intérieur du profil creux et qui divisent le profil creux en cavités triangulaires (H1, H2, H3, H5, H6).

7. Peigne circulaire (R) selon l'une quelconque des revendications 1 à 4, **caractérisé en ce que** l'arbre (15) est muni de plusieurs ouvertures de passage (27) s'étendant transversalement à l'axe longitudinal de l'arbre (15), à travers lesquelles font saillie les moyens de fixation (S3).

8. Peigne circulaire (R) selon la revendication 6, **caractérisé en ce qu'**à l'intérieur du profil creux (20), dans la zone de la section intérieure (22), au moins un moyen supplémentaire (47) est logé qui est muni de taraudages (45) pour recevoir les moyens de fixation (S3), dans lequel le moyen supplémentaire (47) présente une plus grande solidité que le profil creux (20).

9. Peigne circulaire (R) selon la revendication 6, **caractérisé en ce que** les moyens de fixation sont des vis (S3) qui font saillie dans les taraudages (31) du profil creux (20).

10. Peigne circulaire (R) selon l'une quelconque des revendications 1 à 8, **caractérisé en ce que** les moyens de fixation sont des vis (S3, S3a) et au moins l'une des vis (S3a) est une vis de réglage dont la tige de vis (52) fait saillie à travers des alésages de réglage (48, 49, 50) de l'élément d'équilibrage des masses (AG1), de l'arbre (15) et du corps de base (20).

11. Peigne circulaire (R) selon l'une quelconque des revendications 1 à 4, **caractérisé en ce que** l'élément d'appui (13) est relié au corps de base (20) par des moyens de fixation (54) supplémentaires.
